# EUROPEAN PATENT APPLICATION

(11) **EP 2 871 787 A1**
(43) Date of publication of application: **13.05.2015**
(21) Application number: 13191813.8
(22) Date of filing: 06.11.2013
(51) Int. Cl.: H04B 17/00, H01Q 3/26

(54) **A calibration device, associated calibration methods, for a multi-path radio frequency antennas system**

(71) Applicant: ALCATEL LUCENT, 92100 Boulogne-Billancourt (FR)
(72) Inventor: Wantiez, Eric, 91620 NOZAY (FR); Dartois, Luc, 91620 NOZAY (FR)
(74) Representative: Camus, Olivier Jean-Claude

(57) **Abstract**

A multi-path radio frequency antennas system (AS), comprising:
- a pilot sequence generator (PSG),
- at least two transceiver paths (TSP1; TSP2) comprising each:
o a transmitter path (TP1; TP2) comprising at least a transmitter (T1; T2) able to transmit a pilot sequence (PS1; PS2) from the pilot sequence generator (PSG),
o a receiver path (RP1; RP2) comprising at least a receiver (R1; R2) able to receive the pilot sequence (PS1; PS2),

- a calibration device (CD) allowing looping back an emitted pilot sequence from at least one transmitter path (TSP1; TSP2) to at least one receiver path (RP1; RP2),
- a baseband processing device (BPD) for analyzing at least one received pilot sequence (PS1; PS2), in order to generate calibration parameters.

## Description

### FIELD OF THE INVENTION

The present invention relates to a calibration device and associated calibration methods for a multi-path radio frequency antennas system.

### BACKGROUND OF THE INVENTION

In wireless communication networking, topics such as green networking, equipments footprints, and spectral efficiencies have been key drivers for the last wireless technologies. It is needed to better use radio resources to address continuous increase of data demand. Antennas systems are critical in various aspects of the constraint of a wireless network. Their efficiencies have to increase similarly to the expansion of data demand.

Multiple Input Multiple Output (MIMO) antennas systems have brought significant benefits in wireless systems such as better throughput efficiency with respect to energy consumption. Active Antenna Array (AAA) approach provides also significant improvement. For example beam forming techniques allow focusing antennas radiation diagram to specific area of interest, increasing then the spectral efficiency compared to an omnidirectionnal radiation diagram.

For said beam forming to be focused on the right area of interest, a precise knowledge of physical parameters of the transmitters and receivers of the AAA is needed. Phase or gain drifts in the transmitting or receiving chains can randomly harm the focus of the formed beam.

It is then needed to measure precisely calibration parameters of the transmitting and receiving paths of multi-path radio frequency (RF) antennas system such as the AAA. It has to be noted that the calibration measurement operation has to be performed repeatedly since over time the calibration parameters may drift due to hardware components temperature or aging of the system.

Dedicated additional circuit can be implemented to perform calibration measurements, but usually require dedicated active components. This means increasing significantly the Bill Of Material (BOM) and the complexity of the system by adding Single Point of Failure (SpoF). Alternative approaches based on circuit already in place associated with some passive components also allow to measure calibration parameters but they usually require switches to separate the calibration device part from the nominal operation mode of the transceiver, said switches necessarily inducing transitional states while going from a nominal transceiver behavior to a calibration behavior. Calibration result is then degraded.

The invention proposes a solution with a lesser BOM increase, high accuracy results and properly integrated in the nominal transceiver to limit the interaction of the calibration part on the nominal multi-path RF Antennas system functioning.

### SUMMARY OF THE INVENTION

The invention aims to remedy all or some of the disadvantages of the above identified prior art. It particularly proposes ways to measure calibration parameters of a multi-path radio frequency antennas system and to calibrate the transmitting and receiving paths of the said multi-path radio frequency antennas system.

To this end, it is offered to use an adapted multi-path radio frequency antennas system, a calibration device and associated calibration methods.

A first aspect of the invention relates then to a multi-path radio frequency antennas system that comprises:
- a pilot sequence generator,
- at least two transceiver paths that comprises each:
   ○ a transmitter path comprising at least a transmitter able to transmit a pilot sequence from the pilot sequence generator,
   ○ a receiver path comprising at least a receiver able to receive the pilot sequence,
- a calibration device that allows looping back an emitted pilot sequence from at least one transmitter path to at least one receiver path,
- a baseband processing device (BPD) for analyzing at least one received pilot sequence (PS1; PS2), in order to generate calibration parameters.
Thus, thanks to these features, the multi-path radio frequency antennas system is configured to generate calibration parameters. Such a multi-path radio frequency system advantageously does not require an external measuring tool for calibration.

In an embodiment, such multi-path radio frequency antennas system comprises:
- the signal generator that generates a first pilot sequence to a reference transmitter, the reference transmitter being a transmitter of the at least two transceiver paths and being tuned in the radio frequency band of the receivers, the receivers being tuned in the same radio frequency band,
- the reference transmitter that allows the emission of the first pilot sequence on the transmitter path of the at least two transceiver paths,
- the calibration device that comprises a loopback of the emission of the first pilot sequence from the transmitter path of the at least two transceiver paths to each receiver path of the at least two transceiver paths,
- the baseband processing device that analyzes the received pilot sequences by each receiver of the at least two transceiver paths.
Thanks to these features, the multi-path radio frequency antennas system is able to generate calibration parameters for the receiver paths from the analysis of pilot sequences transmitted by the reference transmitter and looped back to the receiver paths.

In another embodiment, the multi-path radio frequency antennas system further comprises:
- the signal generator that generates a first and a second pilot sequences to the transmitters,
- the transmitters that emit the pilot sequences on the transmitter paths, the transmitters being tuned in the same radio frequency band,
- the calibration device that comprises a loopback of the emissions of the first and second pilot sequences, from the transmitter paths to a reference receiver path, the reference receiver path comprising a reference receiver, the reference receiver being a receiver of the at least two transceiver paths, and the reference receiver being tuned in the radio frequency band of the transmitters,

- the reference receiver that receives the first and second pilot sequences,
- the baseband processing device that analyzes the received first and second pilot sequences by the reference receiver.
Thanks to these features, the multi-path radio frequency antennas system is able to generate calibration parameters for the transmitter paths from the analysis of pilot sequences transmitted by the transmitters and looped back to the reference receiver path.

According to other various embodiments, such multi-path radio frequency antennas system comprises one or more of the features below, which should be considered in any possible technical combinations:
- the pilot sequence generator generates each pilot sequence with a different marker,
- the pilot sequences are orthogonal pseudo noise sequences,
- the pilot sequence generator is comprised in each transmitter,
- the calibration device comprises a delay line,
- the calibration device comprises:
   ○ bi-directional couplers,
   ○ directive couplers,
   ○ attenuators,
- the baseband processing device generates calibration parameters by measuring the respective differences in phase and in gain between two received pilot sequences,
- the baseband processing device measures phase and gain differences by correlating at least two received pilot sequences,
- the baseband processing device calibrates the two transceiver paths by applying correction factors for compensating the respective measured differences of phase and gain, on the receiver paths and the transmitter paths,
- the multi-path radio frequency antennas system is an Active Antenna Array.
Thanks to these features, the multi-path radio frequency antennas system is able to generate calibration parameters and apply correction factors for the transceiver paths.

In a second aspect, the invention deals with a calibration device for a multi-path radio frequency antennas system. The calibration device is configured to:
- receive at least one pilot sequence processed by at least one transmitter from the at least two transceiver paths,
- delay the at least one pilot sequence,
- transmit the at least one pilot sequence to at least one receiver from the at least two transceiver paths.
Thanks to these features, the calibration device allows the generation of the calibration parameters of a multi-path radio frequency antennas system.

In a third aspect, the invention deals with a method to calibrate receiver paths from a multi-path radio frequency antennas system, said multi-path radio frequency antennas system comprising:
- at least two transceiver paths comprising each:
   ○ a transmitter path comprising at least a transmitter able to transmit a pilot sequence,
   ○ a receiver path comprising at least a receiver able to receive a pilot sequence,
- a baseband processing device,
and said method comprises the steps of:
- generating a pilot sequence for a reference transmitter, the reference transmitter being a transmitter of the at least two transceiver paths,
- tuning the reference transmitter in the radio frequency band of the receivers,
- transmitting the pilot sequence by the reference transmitter on a reference transmitter path, the reference transmitter path being a transmitter path of the at least two transceiver paths,
- looping back the pilot sequence from the reference transmitter path to each of the receiver path,
- receiving on each receiver the pilot sequence,
- analyzing each received pilot sequence on the baseband processing device,
- generating calibration parameters on the baseband processing device,
- applying correction factors on the baseband processing device according to the calibration parameters.
The method advantageously allows generating calibration parameters and applying correction factors on the receiver paths of a multi-path radio frequency antennas system.

In a fourth aspect, the invention deals with a method to calibrate transmitter paths from a multi-path radio frequency antennas system, said multi-path radio frequency antennas system comprising:
- at least two transceiver paths comprising each:
   ○ a transmitter path comprising at least a transmitter able to transmit a pilot sequence,
   ○ a receiver path comprising at least a receiver able to receive a pilot sequence,
- a baseband processing device,
and said method comprises the step of:
- generating a pilot sequence for each transmitter,
- transmitting the pilot sequences by the transmitters,
- setting a reference receiver path with a reference receiver, the reference receiver path being a receiver path of the at least two transceiver paths, the reference receiver being the receiver of the said receiver path,
- tuning the reference receiver in the radio frequency band of the transmitters,
- looping back the pilot sequences from the transceiver paths to the reference receiver path,
- receiving on the reference receiver the pilot sequences,
- analyzing the received pilot sequence on the baseband processing device,
- generating calibration parameters on the baseband processing device,
- applying correction factors on the baseband processing device according to the calibration parameters.
The method advantageously allows generating calibration parameters and applying correction factors on the transmitter paths of a multi-path radio frequency antennas system.

### BRIEF DESCRIPTION OF THE FIGURES

Some embodiments of the present invention are now described, by way of example only, and with reference to the accompanying drawings, in which:
- FIG. 1 is a schematic block diagram of a multi-path radio frequency antennas system,
- FIG. 2 is a schematic block diagram of a multi-path radio frequency antennas system,
- FIG. 3a is a flowchart showing steps to perform calibration measurement of receiving paths in a multi path radio frequency antennas system,
- FIG. 3b is a flowchart showing steps to perform calibration measurement of transmitting paths in a multi path radio frequency antennas system,

The same reference number represents the same element to the same type of element on all drawings, unless stated otherwise.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

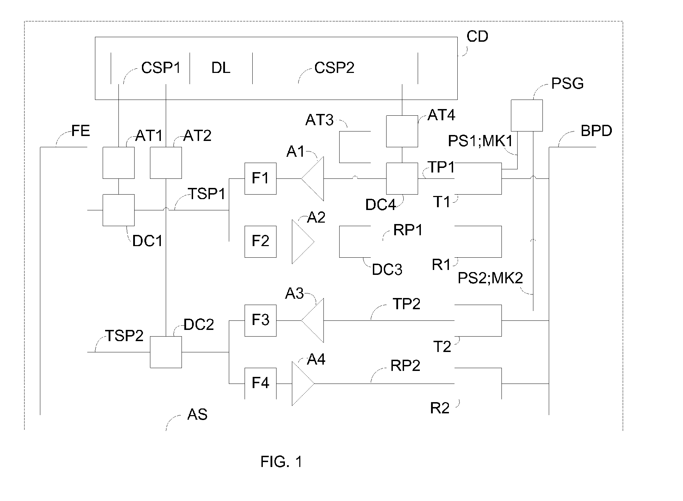

Referring to FIG. 1, a simplified multi-path RF antennas system AS is depicted. It comprises a baseband processing device BPD and a RF frontend device FE. In the exposed embodiment the multi-path RF antennas system AS is a 2 paths radio frequency system. It comprises:
- a first transceiver path TSP1 that comprises:
   ○ a first transmitter path TP1 associated with a first transmitter T1,
   ○ a first receiver path RP1 associated with a first receiver R1,
- a second transceiver path TSP2 that comprises:
   ○ a second transmitter path TP2 associated with a second transmitter T2,
   ○ a second receiver path RP2 associated with a second receiver R2,
- a connection between the first transceiver path TSP1 and the RF frontend device FE,
- a connection between the second transceiver path TSP2 and the RF frontend device FE,
- connections between the baseband processing device BPD and:
   ○ the first transmitter T1,
   ○ the first receiver R1,
   ○ the second transmitter T2,
   ○ the second receiver R2.

The first transmitter T1 and the second transmitter T2 convert digital baseband signals into analog radio frequency signals, whereas the first receiver R1 and the second receiver R2 convert analog radio frequency signals into digital baseband signals.

In order not to obscure the presentation of the invention, the following embodiments refer to the 2 paths antennas system from FIG. 1, but it should be apparent to the man skilled in the art to deduce from the 2 paths antennas system technical solution, a technical realization for a multi-paths RF antennas system with N paths, N being an integer greater than 2.

In the exposed embodiment, the first and second transmitters T1 and T2 are wideband transmitters that can be tuned into the receiving radio frequency band of the multi-path RF antennas system AS. Similarly, the first and second receivers R1 and R2 are wideband receivers that can be tuned into the transmitting radio frequency band of the multi-path RF antennas system. In nominal operation mode the receivers of the multi-path RF antennas system AS comprises filtering means to suppress effect of parasitic RF signals which frequencies are out of bound of the receivers' nominal receiving frequency band.

In embodiments, the first transmitter path TP1 further comprises a first amplification stage A1 and a first filtering stage F1 at the output of the first transmitter T1, well-known from radio frequency techniques. Similarly, the first receiver path RP1 comprises a second filtering stage F2 and a second amplification stage A2 at the input of the first receiver R1. In a non limiting example, the second amplification stage A2 at the input of the first receiver R1 is a Low Noise Amplifier (LNA).

Analogously, the second transmitter path TP2 further comprises a third amplification stage A3 and a third filtering stage F3 at the output of the second transmitter T2. The second receiver path RP2 comprises also a fourth filtering stage F4 and a fourth amplification stage A4 at the input of the second receiver R2. In a non limiting example, the fourth amplification stage A4 at the input of the first receiver R2 is a Low Noise Amplifier (LNA).

The elements provided herein above describes a multi-path RF antennas systems, simplified to two RF paths, that can be part of an Active Antenna Array for beam forming. The described elements are either hardware components or hardware components combined with software program product, and said components eventually are prone to aging or physics parameters drifting. In a non limiting example the transmitters or the receivers are prone to phase drift due to temperature variation. In another example, the non linearity of the amplifiers used in the transmitter may introduce signal distortion. In another example the total gain observed on the first receiver path may experience variation due to aging of components. In yet another non limiting example, the delay over the transceiver paths is prone to error due to jittering induce by local oscillators. The calibration parameters such as the phase and the gain of each transceiver need then to be measured, and to be corrected or compensated.

For that purpose, in a preferred embodiment, the multi-path RF antennas system AS comprises a calibration device CD. Said calibration device comprises:
- a loopback allowing to loopback the first transmitter path TP1 and the second transmitter path TP2 on at least the first receiver path RP1.
- the said loopback allowing to loopback the first transmitter path TP1 on the first receiver path R1 and the second receiver path R2,
- a delay line DL
- a first bi-directional coupler/splitter CSP1,
- a second bi-directional coupler/splitter CSP2,
- the said second bi-directional coupler/splitter CSP2 being connected to the delay line DL, and the said delay line DL being connected to the first bi-directional coupler/splitter CSP1.

In an embodiment the bi-directional couplers/splitters CSP1 and CSP2 are components able to combine a variety of signals into a single signal. In another embodiment the bi-directional couplers/splitters CSP1 and CSP2 are components able to split a signal into a variety of signals. In a preferred embodiment the bi-directional couplers/splitters CSP1 and CSP2 are able to couple a variety of signals into a single signal in one direction, and to split a signal into a variety of signals in the opposite direction.

The calibration device CD is connected respectively to the first transceiver path TSP1 and the second transceiver path TSP2. In an embodiment, the connection between the calibration device CD and the first transceiver TSP1 comprises a first bi-directional coupler DC1, and an attenuator AT1, and the connection between the calibration device CD and the second transceiver TSP2 comprises a second bi-directional coupler DC2 and a second attenuator AT2. In these non limiting examples, the bi-directional coupler allows to relay the signals from transceiver paths to the calibration device CD, and to relay the signals from the calibration device respectively to the first transceiver path TSP1 and the second transceiver path TSP2.

In an embodiment a bi-directional coupler, such as the bi-directional coupler DC1, is a coupler that couples incoming signal from the calibration device CD to signals transiting on a transceiver path. The bi-directional coupler is also a coupler able to duplicate and relay incoming signal from a transceiver path to the connection between the calibration device CD and the said transceiver path, the said coupler acting then as a splitter.

A link with the first bi-directional coupler/splitter CSP1 connects the first transceiver path TSP1 and the calibration device CD. Similarly, a link with the first bi-directional coupler/splitter CSP1 connects the second transceiver path TSP2 and the calibration device CD.

The calibration device CD is further connected to the first receiver path RP1 through a link with the second bi-directional coupler/splitter CSP2, said link also comprises a third directional coupler DC3 and an third attenuator AT3.

In a preferred embodiment, the third directional coupler DC3 is located at the output of the second amplification stage A2 of the first receiver path RP1. Such placement of the third directional coupler DC3 is advantageous to isolate the connection of the calibration device CD with the first receiver path R1, from the nominal functioning of the first receiver path RP1.

The first transmitter path TP1 is also connected to the calibration device CD through a link comprising a fourth directional coupler DC4 and a fourth attenuator AT4, said link being connected with the second bi-directional coupler/splitter CSP2.

In another preferred embodiment, the fourth directional coupler DC4 is located at the input of the first amplification stage A1 of the first transmitter path TP1. Such placement of the fourth directional coupler DC4 is advantageous to isolate the connection of the calibration device CD with the first transmitter path TP1, from the nominal functioning of the first transmitter path TP1.

In an embodiment, the third directional coupler DC3 allows only signal to transit from the calibration device CD to the first receiving path RP1.

In another embodiment, the fourth directional coupler DC4 allows only signal to transit from to the first transmitter path TP1 to the calibration device CD, through the second bi-directional coupler/splitter CSP2.

In yet another embodiment, the directional couplers, the attenuators, the bi-directional couplers/splitters and the delay line are passive components with known characteristics in terms of phase and gain drifting. In a non limiting example, the passive aspects of these components render their drifting in phase or gain negligible compared to the drifting experienced by the multi-path RF antennas system.

The multi-path RF antennas system AS also comprises a pilot sequence generator PSG. It is able to generate sequences to be processed by the first transmitter T1 and the second transmitter T2. In an embodiment, the pilot sequence generator PSG is a dedicated component that is connected respectively to the first transmitter T1 and the second transmitter T2. In another embodiment, the pilot sequence generator PSG is distributed in each transmitter T1 and T2. In this case the pilot sequence generator PSG is supervised in the same manner as the first transmitter T1 and the second transmitter T2.

In an embodiment the first transmitter T1 and the second transmitter T2 are able to transmit the sequences from the pilot sequence generator, in a frequency band wide enough to cover the full calibration bands. In non limiting examples the calibration bands to be covered are single band of Long Term Evolution (LTE) Time Division Duplex (TDD), or transmission and reception bands of LTE Frequency Division Duplex (FDD).

In yet another embodiment, the pilot sequence generator generates sequences to the first transmitter T1 and the second transmitter T2, each sequence being marked with a unique marker. In a non limiting example, the pilot sequence generator PSG generates a first pilot sequence PS1 for the first transmitter T1, and a second pilot sequence PS2 to the second transmitter T2, said first pilot sequence PS1 and second pilot sequence PS2 have different markers, respectively MK1 and MK2. In non limiting examples the first marker MK1 and the second marker MK2 are digital markers or are coding markers. In other non limiting examples, the first marker MK1 and the second marker MK2 are in-band markers or are temporal markers.

In yet another embodiment, the first pilot sequence PS1 and the second pilot sequences PS2 are orthogonal pseudo noise sequences. It is meant by orthogonal sequences that the correlation of the first pilot sequence PS1 and second pilot sequence PS2 is null. The orthogonality property of the first and second pilot sequences is considered then as marking differently the sequences.

It has to be noted that the embodiment involving markers MK1 and MK2, or the embodiment involving orthogonality of the first and second pilot sequences PS1 and PS2, allows identifying the first pilot sequence PS1 from the second pilot sequence PS2.

The mechanism to measure calibration parameters on the transmitting path TP1 and TP2 is now described.

The first receiver R1 is considered as a reference receiver. It is tuned into the transmitting radio frequency band in order to be able to receive signals emitted by the first transmitter T1 and the second transmitter T2.

In an embodiment, the first receiver R1 is able to be tuned in a frequency band wide enough to cover the full calibration bands.

The pilot sequence generator PSG generates the first pilot sequence PS1 and the second pilot sequence PS2. The first pilot sequence PS1 is processed by the first transmitter T1, to be converted from baseband frequency domain to radio frequency domain. Similarly the second pilot sequence PS2 is processed by the second transmitter T2, to be converted from baseband frequency domain to radio frequency domain. In a preferred embodiment, the pilot sequence generator PSG is distributed on the first transmitter T1 and the second transmitter T2, such as each transmitter is able to generate pilot sequence, each pilot sequence comprising a unique marker. In another preferred embodiment the first pilot sequence PS1 and the second pilot sequence PS2 are orthogonal pseudo noise sequences.

The first transmitter T1 transmits the first pilot sequence PS1 on the first transmitter path TP1. The first pilot sequence PS1 is being propagated further on the first transceiver path TSP1 up to the first bi-directional coupler DC1.

Similarly, the second transmitter T2 transmits the second pilot sequence PS2 on the second transmitter path TP2. The second pilot sequence PS2 is being propagated further on the second transceiver path TP2 up to the second bi-directional coupler DC2.

In an embodiment, the first transmitter path TP1 is connected to the first transceiver path TSP1 through the first amplification stage A1 and the first filtering stage F1. Similarly the second transmitter path TP2 is connected to the second transceiver path TSP2 through the third amplification stage A3 and the first filtering stage F3. The first pilot sequence PS1 and the second pilot sequence PS2 are amplified respectively by the first amplifier stage A1 and the third amplifier stage A3 , and then filtered by the first and third filtering stage F1 and F3 before being propagated to the first transceiver path TSP1 and the second transceiver path TSP2. In a non limiting example the first and third amplifier stages A1 and A3 are respectively 43dB gain non linear amplifiers and the first and third filtering stages F1 and F3 are band pass filter (BPF) with response type centered on transmit band. Typically BPF and non linear amplifier are the two main phase and gain error contributors.

The first pilot sequence PS1 and the second pilot sequence PS2 are then respectively routed to the connection between the first bi-directional coupler DC1 and the first bi-directional coupler/splitter CSP1, and to the connection between the second bi-directional coupler DC2 and the first bi-directional coupler/splitter CSP1, said first bi-directional coupler/splitter CSP1 being comprised in the calibration device CD.

In an embodiment the first pilot sequence PS1 and the second pilot sequence PS2 are attenuated while transiting respectively through the first bi-directional coupler DC1 and second bi-directional coupler DC2. In a non limiting example the attenuation of a bi-directional coupler is -20dB.

In another embodiment the connection between the first bi-directional coupler DC1 and the first bi-directional coupler/splitter CSP1 comprises the attenuator AT1 that also attenuates the first pilot sequence PS1 that has been directed by the first bi-directional coupler DC1 from the first transceiver path TSP1. Analogously the connection between the second bi-directional coupler DC2 and the first bi-directional coupler/splitter CSP1 comprises the attenuator AT2 that attenuates the second pilot sequence PS2 that has been directed by the second bi-directional coupler DC2 from the second transceiver path TSP2.

The first pilot sequence PS1 and the second pilot sequence PS2 reach then the calibration device CD, and more particularly the first bi-directional coupler/splitter CSP1. The said coupler/splitter combines the first pilot sequence PS1 and the second pilot sequence PS2. In an embodiment, the first bi-directional coupler/splitter CSP1 is a 2:1 coupler/splitter, combining 2 paths into a single path, and splitting a single path into 2 paths. In another embodiment not depicted on FIG. 1, for a 4 paths RF antennas system, the first bi-directional coupler/splitter CSP1 is a 4:1 coupler/splitter. In yet another embodiment the first bi-directional coupler/splitter CSP1 adds attenuation to the combined sequence comprising the first pilot sequence PS1 and the second pilot sequence PS2. In a non limiting example the attenuation of the first bi-directional 2:1 coupler/splitter CSP1 while coupling sequences is -3.5dB. In another non limiting example a 4:1 coupler/splitter attenuates signals of -7dB.

The combined sequence of the first pilot sequence PS1 and the second pilot sequence PS2 is then transmitted to the delay line DL. The said delay line delays the combined sequence comprising the first pilot sequence PS1 and the second pilot sequence PS2. In an embodiment the introduced delay by the delay line allows the combined sequence to be delayed such as it can be identified amongst parasitic sequences or undesirable loopback effects on the first pilot sequence PS1 and the second pilot sequence PS2. In this embodiment the introduced delay is known and is greater than the various delays induced by the components comprised in the multi-path RF antennas system AS. In a non limiting example, the multi-path RF antennas system operates with signal of 2GHz frequency, and the delay line DL is 1.5m RF line in microstrip or coaxial. In another non limiting example the insertion loss induce by the delay line DL are negligible and either contribute isolating to the calibration device CD.

The delayed combined sequence of the first pilot sequence PS1 and the second pilot sequence PS2 is then transmitted to the second bi-directional coupler/splitter CSP2. In an embodiment the second bi-directional coupler/splitter CSP2 is a 2:1 coupler/splitter. Analogously to the first bi-directional coupler/splitter CSP1, the second bi-directional coupler/splitter CSP2 attenuates signals to be coupled or splitted. In a non limiting example the attenuation of the second bi-directional coupler/splitter CSP2 is -3.5dB.

The delayed combined sequence of the first pilot sequence PS1 and the second pilot sequence PS2 is then splitted by the second bi-directional coupler/splitter CSP2. A first splitted sequence is propagated over the connection between the calibration device CD and the fourth directional coupler DC4. Since said fourth directional coupler DC4 allows only signal to transit from to the first transmitter path TP1 to the calibration device CD, the said splitted sequence is then blocked by the fourth directional coupler DC4. A second splitted sequence is propagated over the connection between the calibration device CD and the first receiver path RP1 through the third attenuator AT3 and the third directional coupler DC3. In an embodiment, the third directional coupler DC3 attenuates signal that are directed to the first receiver path RP1. In a non limiting example the attenuation of the third directional coupler DC3 is -20dB. In another non limiting example, the third attenuator AT3 is a -30dB attenuator.

In the preferred embodiment wherein the third directive coupler DC3 is located at the output of the second amplification stage A2 of the first receiver path RP1, the said location of the third directive coupler DC3 is advantageous to isolate the second splitted sequence from being processed by the second filtering stage F2 and the second amplification stage A2 of the first receiver path R1. Said stages may introduce undesirable specific modifications on the second splitted sequence.

The second splitted sequence is then carried over the first receiver path RP1 up to the first receiver R1 that acts as a reference receiver, which receives the looped back first and second pilot sequences PS1 and PS2 initially transmitted respectively by the first transmitter T1 and the second transmitter T2. The calibration device CD is then considered to loopback the first transmitter path TP1 and the second transmitter path TP2 to the first receiver path RP1 as a reference receiver, with the first receiver R1 as a reference receiver.

The first receiver R1 converts the second splitted sequence from the radio frequency domain to the digital baseband domain.

The converted splitted sequence is then transmitted to the baseband processing device BPD. As a reminder, the said converted splitted sequence comprises the delayed and attenuated combination of the first pilot sequence PS1 and the second pilot sequence PS2 in digital baseband domain. Said first and second pilot sequence PS1 and PS2 have transited along the first and second transmitter path TP1 and TP2, the first and second transceiver path TSP1 and TSP2, and the calibration device. The converted splitted sequence is then representative of the drifting of the calibration parameters such as phase and gain that are experienced by the first transmitter T1, the first transmitter path TP1 and the first transceiver path TSP1. Similarly, the converted splitted sequence is then representative of the drifting of the calibration parameters such as phase and gain that are experienced by the second transmitter T2, the second transmitter path TP2 and the second transceiver path TSP2.

In an embodiment the baseband processing device BPD proceeds to measure the calibration parameters of the transmitting paths by comparing the received pilot sequence PS1 and PS2. In a non limiting example, the baseband processing device BPD is able to determine the beginning of the delayed and combined first and second pilot sequences PS1 and PS2 according to the delay induced by the delay line DL. The baseband processing device BPD measures then the relative gain difference and the relative phase difference between the first pilot sequence PS1 and the second pilot sequence PS2, combined in a single received sequence, but advantageously identifiable with the first maker MK1 and the second marker MK2.

In another embodiment, the baseband processing device BPD performs correlation on the delayed and combined first and second pilot sequences PS1 and PS2, with respect to the parameters used by the pilot sequence generator PSG to generate the said first and second pilot sequences PS1 and PS2. By correlating the delayed and combined first and second pilot sequences PS1 and PS2 with the theoretical first pilot sequence PS1, the baseband processing device BPD measures the drift of phase and gain experienced by the transmission of the first pilot sequence PS1 from the first transmitter T1 to the first transceiver path TSP1, up to the calibration device CD and looped back on the first receiver path RP1 to the first receiver R1. Equivalently, by correlating the delayed and combined first and second pilot sequences PS1 and PS2 with the theoretical second pilot sequence PS2, the baseband processing device BPD measures the drift of phase and gain experienced by the transmission of the second pilot sequence PS2 from the second transmitter T2 to the second transceiver path TSP2, up to the calibration device CD and looped back on the first receiver path RP1 to the first receiver R1.

In an embodiment not depicted on FIG. 1, the baseband processing device BPD compensate the drift of calibration parameters of the transmitting paths by applying correction factors on baseband signals to be transmitted by the first transmitter T1 and the second transmitter T2. The said correction factors may be applied relatively to a transmitter path if the drift in gain and phase and have been measured relatively from a transmitter path to another, or they may be applied as absolute corrections if the calibration parameters have been measured independently for each transmitter paths.

The mechanism to measure calibration parameters on the receiving path RP1 and RP2 is now described.

The first transmitter T1 is considered as a reference transmitter. The pilot sequence generator, either being a standalone device or being comprised in the first transmitter T1, generates a first pilot sequence PS1. The reference transmitter process the first pilot sequence PS1 and transmit it on the first transmitter path TP1.

In an embodiment, the first pilot sequence PS1 reaches then the fourth directional coupler DC4 that connects the first transmitter path TP1 to the calibration device CD. The fourth directional coupler DC4 relays the first pilot sequence PS1 in the direction of the calibration device CD and also on the first transmitter path TP1 in the direction of the first transceiver path TSP1. In a non limiting example the fourth directional coupler DC4 attenuates signals of -20dB.

In another embodiment, the connection between the calibration device CD and the first transmitter path TP1 comprises also the fourth attenuator AT4. In a non limiting example the fourth attenuator AT4 is a -30dB attenuator.

In the preferred embodiment wherein the fourth directive coupler DC4 is located at the input of the first amplification stage A1 of the first transmitter path TP1, the said location of the fourth directive coupler DC4 is advantageous to isolate the first pilot sequence PS1 from being processed by the first filtering stage F1 and the first amplification stage A1 of the first transmitter path TP1. Said stages may introduce undesirable specific modifications on the first pilot sequence PS1.

The connection between the calibration device CD and the first transmitter path TP1 comprises a link with the second bi-directional coupler/splitter CSP2. The second bi-directional coupler/splitter combines the first pilot sequence PS1 with signals incoming from the other connection of the calibration device with the first receiver R1 for example. Said signals can be considered as negligible noise signals. It has to be noted that, in an embodiment, the second bi-directional coupler/splitter CSP2 attenuates signals of -25dB. The first pilot sequence PS1 is then transmitted from the second bi-directional coupler/splitter CSP2 to the delay line DL.

Said delay line DL is delaying the first pilot sequence PS1 of a known delay. As described above, the delay line DL allows identifying the first pilot sequence PS1 amongst parasitic sequences or undesirable signal loopbacks, thanks to the known induced delay.

The first pilot sequence PS1 is transmitted from the delay line DL to the first bi-directional coupler/splitter CSP1. In this direction, the first bi-directional coupler/splitter CSP1 behaves as a splitter so that the first pilot sequence PS1 is splitted in two sequences, a first TX splitted sequence and a second TX splitted sequence. These said two sequences are propagated respectively towards the connection between the calibration device CD and the first transceiver path TSP1, and towards the connection between the calibration device CD and the second transceiver path TSP2.

In an embodiment the first TX splitted sequence and the second splitted sequence are attenuated respectively by the first attenuator AT1 and the second attenuator AT2, that are respectively comprised in the connections between the calibration device CD and the first transceiver path TSP1 and the second transceiver path TSP2.

In another embodiment, the first TX splitted sequence is propagated up to the first transceiver path TSP1 through the first bi-directional coupler DC1. The said first bi-directional coupler DC1 directs the first TX splitted sequence on the first transceiver path TSP1. The first TX splitted sequence propagates then further to the first receiver path RP1.

Similarly the second TX splitted sequence is propagated up to the second transceiver path TSP2 through the second bi-directional coupler DC2. The said second bi-directional coupler DC2 directs the second TX splitted sequence on the second transceiver path TSP2, and is propagated further to the second receiver path RP2.

In non limiting examples, the first TX splitted sequence and the second TX splitted sequence are attenuated respectively by the first bi-directional coupler DC1 and the second bi-directional coupler DC2.

Propagating respectively on the first receiver path RP1 and the second receiver path RP2, the first TX splitted sequence reaches the first receiver R1 and the second TX splitted sequence reaches the second receiver R2. Said first receiver R1 and second receiver R2 respectively converts the first TX splitted sequence and the second TX splitted sequence from the radio frequency domain to the baseband domain.

The first pilot sequence initially transmitted by the reference transmitter has been then looped back by the calibration device CD to the respective first receiver path RP1 comprising the first receiver R1 and the second receiver path RP2 comprising the second receiver R2.

The converted first and second TX splitted sequences are then transmitted respectively by the first receiver R1 and the second receiver R2 to the baseband processing device BPD. Each of the converted first and second TX splitted sequences have transited respectively on the first transceiver path TSP1 comprising the first receiver path RP1 and the first receiver R1, and on the second transceiver path TSP2 comprising the second receiver path RP2 and the second receiver R2. The converted first and second TX splitted sequences are then representative of the respective drift of the calibration parameters such as the gain and phase, experienced respectively on the first transceiver path TSP1 up to the first receiver R1 and the second transceiver path TSP2 up to the second receiver R2.

Similarly to the estimation of the calibration parameters of the transmitting paths, the baseband processing device BPD proceeds to measure the calibration parameters of the receiving paths. The baseband processing device BPD processes the converted first and second TX splitted sequences. In an embodiment the baseband processing device compares the initial first pilot sequence transmitted by the reference transmitter respectively with the converted first and second TX splitted sequences. Phase and gain differences are measured by the baseband processing devices by comparing the received pilot sequences to the initial first pilot sequence.

In another embodiment, the baseband processing device BPD operates correlation between the converted first and second TX splitted sequences. Said correlation allows to measure relative calibration parameters between the receiving paths of the multi-path RF antennas system. In a non limiting example, by correlating the converted first TX splitted sequence with the converted second TX splitted sequence, the baseband processing device BPD is able to measure the relative difference of phase and gain between the first transceiver path TSP1 comprising the first receiver path RP1, and the second transceiver path TSP3 comprising the second receiver path RP2.

In an embodiment not depicted on FIG. 1, the baseband processing device BPD compensates the drift of calibration parameters of the receiving paths by applying correction factors on baseband signals to be received by the first receiver R1 and the second receiver R2. The said correction factors may be applied relatively to a receiver path if the drift in gain and phase have been measured relatively from a receiver path to another, or they may be applied as absolute correction if the calibration parameters have been measured independently for each receiver paths.

It has to be noted that parasitic signals are generated by transmission of pilot sequences while being propagated along the connections and components of the multi-path RF antennas system.

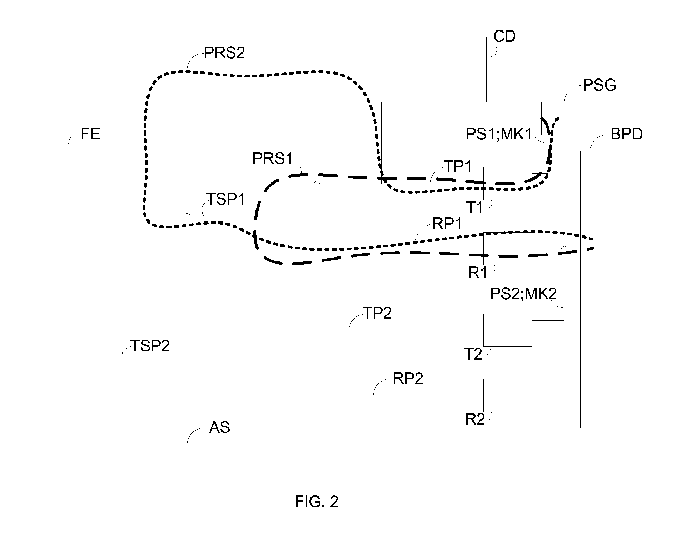

Referring to FIG. 2, a non limiting example is described. FIG. 2 depicts a multi-path RF antennas system, similarly to FIG. 1 but with simplified schematized connections between the calibration device CD and the first transceiver path TSP1 and the second transceiver path TSP2, in order to facilitate the representation of the path of the parasitic sequences.

In this example, the first pilot sequence PS1 transmitted by the first transmitter T1 for the measurement of the calibration parameter of the transmitting paths is considered. The transmitted first pilot sequence PS1 is a radio frequency signal that propagates in any possible connection. It propagates over the first transmitter path TP1. The said first transmitter path TP1 is combined with the first receiver path RP1 into the first transceiver path TSP1. After being processed by amplification and filtering stages, not depicted on FIG. 2, the first pilot sequence PS1 is propagating on the first transceiver path TSP1, and is also propagating on the first receiver path RP1. It is then considered as a first parasitic sequence PRS1 that is transmitted through the first receiver path RP1 to the first receiver R1.

Similarly a second parasitic sequence PRS2 is issued from the propagation of the first pilot sequence PS1 over the first transmitter path TP1. In this non limiting example the first pilot sequence PS1 is propagated on the first transmitter path TP1 and also on the connection between the calibration device CD and the first transmitter path TP1, through the fourth directional coupler DC4 not depicted on FIG. 2. The second parasitic sequence PRS2 then propagates further through the calibration device CD, on the connection between the said calibration device CD and the first transceiver path TSP1, and then on the first receiver path RP1, up to the first receiver R1.

In the case of the measurement of the calibration parameters of the transmitting paths, using a pilot sequence, parasitic signals are then generated. However the invention advantageously allows distinguishing informative pilot sequences from parasitic sequences. In an embodiment the calibration device CD introduces a known delay through a delay line, the said delay allowing determining on a receiver the start of a received pilot sequence. Moreover the parasitic sequences that are not propagating through the preferred calibration path as described herein are considered as weak signals since the parasitic sequences are transiting through components that attenuate signal whereas the first pilot sequence PS1 is transiting through the amplification stage that connects the first transmitter path TP1 to the first transceiver path TSP1. The first pilot sequence PS1 also comprises in a described embodiment the first marker MK1 that allows the said sequence to be differentiated from other received pilot sequences and their associated parasitic sequences.

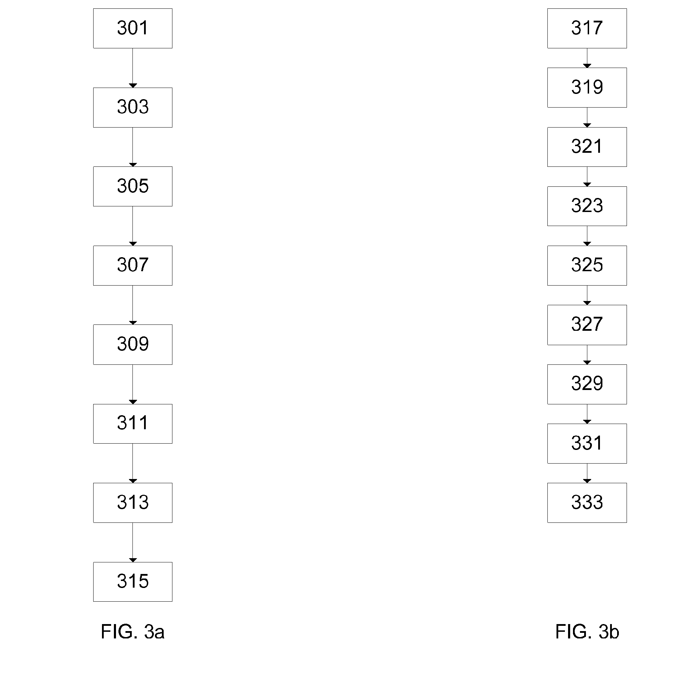

A method to calibrate the receiver paths of the multi-path RF antennas system is described herein below, and referring to FIG 3a.

In a first step 301, the pilot sequence generator PSG generates a first pilot sequence PS1 to a reference transmitter. In an embodiment, the reference transmitter is the first transmitter T1 of the first transmitter path TP1. In this embodiment the first transmitter path TP1 is considered as a reference transmitter path.

In a second step 303, the reference transmitter is tuned in the radio frequency band of the receivers R1 and R2. In an embodiment the first receiver R1 and the second receiver R2 are operating in the same radio frequency band.

In a third step 305, the reference transmitter transmits the first pilot sequence PS1 on the reference transmitter path.

In a fourth step 307, the calibration device CD is looping back the first pilot sequence PS1, from the reference transmitter path respectively to the first transceiver path TSP1 and to the second transceiver path TSP2, that are comprising respectively the first receiver path RP1 with the first receiver R1 and the second receiver path RP2 with the second receiver R2.

In a fifth step 309, the first receiver R1 and second receiver R2 are receiving each the first pilot sequence PS1 that has been looped back from the reference transmitter path. It has to be noted that in this step, each receiver receives a pilot sequence originated from the first pilot sequence and characterized by the path that the said first pilot sequence has taken to reach each of the receiver.

In a sixth step 311, the baseband processing device BPD is analyzing the received sequences by the first receiver R1 and the second receiver R2. In an embodiment, the baseband processing device BPD compares the received sequences. In another embodiment, the baseband processing device BPD operates correlation on the received sequences.

In a seventh step 313, the baseband processing device BPD is generating calibration parameters from the analysis performed on the sixth step 311 on the received sequences by the first receiver R1 and the second receiver R2. The said analysis allows measuring calibration parameters such as the differences of phase and gain.

In an eighth step 315, the baseband processing device BPD is applying correction factors based on the calibration parameters, in order to calibrate the receiving paths of the multi-path RF antennas system.

A method to calibrate the transmitter paths of the multi-path RF antennas system is described herein below, and referring to FIG 3b.

In a ninth step 317, the pilot sequence generator PSG generates towards the first transmitter T1 and the second transmitter T2, respectively a first pilot sequence PS1 and a second pilot sequence PS2.

In a tenth step 319, the first transmitter T1 emits the first pilot sequence PS1 on the first transmitter path TP1, and the second transmitter emits the second pilot sequence PS2 on the second transmitter path TP2.

In an eleventh step 321, a reference receiver and a reference receiver path are being set. In an embodiment the reference receiver is the first receiver R1, and the reference receiver path, is the receiver path of the first receiver R1, designated as the first receiver path RP1.

In a twelfth step 323, the reference receiver is tuned in the radio frequency band of the first and second transmitters T1 and T2. In a non limiting example, the said first and second transmitters T1 and T2 are operated at the same radio frequency band.

In a thirteenth step 325, the calibration device CD is looping back the first pilot sequence PS1 and the second pilot sequence PS2, respectively from the first transceiver path TSP1 and the second transceiver path TSP2, that are comprising respectively the first transmitter T1 and the second transmitter T2, to the reference receiver path.

In a fourteenth step 327, the reference receiver is receiving the first pilot sequence PS1 and the second pilot sequence PS2 that have been looped back by the calibration device CD.

In a fifteenth step 329, the baseband processing device BPD is analyzing the first pilot sequence PS1 and the second pilot sequence PS2 received by the reference receiver. In an embodiment, the baseband processing device BPD compares the received sequences. In another embodiment, the baseband processing device BPD operates correlation on the received sequences.

In a sixteenth step 331, the baseband processing device BPD is generating calibration parameters based on the analysis of the received first and second pilot sequences PS1 and PS2.

In a seventeenth step 333, the baseband processing device BPD is applying correction factors based on the calibration parameters, in order to calibrate the transmitting paths of the multi-path RF antennas system.

Apparatus and methods have been described to perform measurements of calibrations parameters, and to calibrate radio frequency paths of a multi-paths RF antennas system.

The calibration device CD is a simple device comprising passive components with reduced costs, such as attenuators, couplers and a delay line. The invention describes then a mean for calibration that does not increase drastically the Bill Of Material such as the use of an external active measuring and calibrating tool.

The invention embodies advantageously technical realizations that are using already available functionalities of a multi-path RF antennas system such as the nominal transmitting and receiving paths, and the baseband processing system.

The use of existing components of the said antennas system, and the use of passive components, embedded in the antennas system in an embodiment, is also advantageous for the transmitting and receiving paths to be calibrated on a periodical basis.

The tuning of the nominal transmitter into the receiving radio frequency, and the tuning of the nominal receiver into the transmitting radio frequency are providing two advantages. The first advantage is the use of the nominal components to generate the pilot sequences for the calibration phases. The second advantage is to provide isolation of the calibration phases from the nominally tuned radio frequency processing phases.

The exposed embodiments provide means and methods to measure and calibrate a multi-paths RF antennas system, and in particular, to manage calibration parameters such as drifting of phase and gain. In an embodiment the multi-path RF antenna system is an Active Antenna Array (AAA) system, for which management of the drifting of said calibration parameters is crucial for beam forming, and the invention advantageously provides a technical solution for performing measurements and calibration of the AAA system.

It should be appreciated by those skilled in the art that any block diagrams herein represent conceptual views of illustrative circuitry embodying the principles of the invention. Similarly, it will be appreciated that any flow charts, and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A multi-path radio frequency antennas system (AS), comprising
- a pilot sequence generator (PSG),
- at least two transceiver paths (TSP1; TSP2) comprising each:
○ a transmitter path (TP1; TP2) comprising at least a transmitter (T1; T2) able to transmit a pilot sequence (PS1; PS2) from the pilot sequence generator (PSG),
○ a receiver path (RP1; RP2) comprising at least a receiver (R1; R2) able to receive the pilot sequence (PS1; PS2),
- a calibration device (CD) allowing looping back an emitted pilot sequence from at least one transmitter path (TSP1; TSP2) to at least one receiver path (RP1; RP2),
- a baseband processing device (BPD) for analyzing at least one received pilot sequence (PS1; PS2), in order to generate calibration parameters.

2. A multi-path radio frequency antennas system (AS) according to claim 1, wherein:
- the signal generator generates a first pilot sequence (PS1) to a reference transmitter, the reference transmitter being a transmitter (T1) of the at least two transceiver paths (TSP1; TSP2) and being tuned in the radio frequency band of the receiver (R1), the receivers (R1; R2) being tuned in the same radio frequency band,
- the reference transmitter allows the emission of the first pilot sequence (PS1) on the transmitter path (TP1; TP2) of the at least two transceiver paths (TSP1; TSP2),
- the calibration device (CD) comprises a loopback of the emission of the first pilot sequence from the transmitter path (TP1) of the at least two transceiver paths (TSP1; TSP2) to each receiver path (RP1; RP2) of the at least two transceiver paths (TSP1; TSP2),
- the baseband processing device analyzes the received pilot sequences by each receiver (R1; R2) of the at least two transceiver paths (TSP1; TSP2).

3. A multi-path radio frequency antennas system (AS) according to any of the claims 1 to 2 wherein:
- the signal generator generates a first and a second pilot sequences (PS1; PS2) to the transmitters (T1; T2),
- the transmitters (T1; T2) emit the pilot sequences (PS1; PS2) on the transmitter paths (TP1; TP2), the transmitters (T1; T2) being tuned in the same radio frequency band,
- the calibration device (CD) comprises a loopback of the emissions of the first and second pilot sequences (PS1; PS2), from the transmitter paths (TP1; TP2) to a reference receiver path, the reference receiver path comprising a reference receiver, the reference receiver being a receiver (R1) of the at least two transceiver paths (TSP1; TSP2), and the reference receiver being tuned in the radio frequency band of the transmitters (T1; T2),
- the reference receiver receives the first and second pilot sequences (PS1; PS2),
- the baseband processing device (BPD) analyzes the received first and second pilot sequences (PS1; PS2) by the reference receiver.

4. A multi-path radio frequency antennas system (AS) according to claim 3, wherein the pilot sequence generator (PSG) generates each pilot sequence (PS1; PS2) with a different marker (MK1; MK2).

5. A multi-path radio frequency antennas system (AS) according to any of the claims 3 to 4, wherein the pilot sequences (PS1; PS2) are orthogonal pseudo noise sequences.

6. A multi-path radio frequency antennas system (AS) according to any of the claims 1 to 5, wherein the pilot sequence generator is comprised in each transmitter (T1; T2).

7. A multi-path radio frequency antennas system (AS) according to any of the claims 1 to 6, wherein the calibration device (CD) comprises a delay line (DL).

8. A multi-path radio frequency antennas system (AS) according to claim 7, wherein the calibration device (CD) comprises:
- bi-directional couplers (CSP1; CSP2),
- directive couplers (DC1; DC2; DC3; DC4),
- attenuators (AT1; AT2; AT3; AT4).

9. A multi-path radio frequency antennas system (AS) according to any of the claims 1 to 8, wherein the baseband processing device (BPD) generates calibration parameters by measuring the respective differences in phase and in gain between two received pilot sequences (PS1; PS2).

10. A multi-path radio frequency antennas system (AS) according to claim 9, wherein the baseband processing device (BPD) measures phase and gain differences by correlating at least two received pilot sequences (PS1; PS2).

11. A multi-path radio frequency antennas system (AS) according to any of the claims 9 to 10, wherein the baseband processing device (BPD) calibrates the two transceiver paths (TSP1; TSP2) by applying correction factors for compensating the respective measured differences of phase and gain, on the receiver paths and the transmitter paths.

12. A multi-path radio frequency antennas system (AS) according to any of the claims 1 to 11, wherein the multi-path radio frequency antennas system (AS) is an Active Antenna Array (AAA).

13. A calibration device (CD) for multi-path radio frequency antennas system (AS) comprising a loopback on a plurality of transceiver paths (TSP1; TSP2), said calibration device (CD) is configured to:
- receive at least one pilot sequence (PS1; PS2) processed by at least one transmitter (T1; T2) from the at least two transceiver paths (TSP1; TSP2),
- delay the at least one pilot sequence (PS1; PS2),
- transmit the at least one pilot sequence (PS1; PS2) to at least one receiver from the at least two transceiver paths (TSP1; TSP2),

14. A method to calibrate receiver paths from a multi-path radio frequency antennas system, said multi-path radio frequency antennas system comprising:
- at least two transceiver paths (TSP1; TSP2) comprising each:
○ a transmitter path (TP1; TP2) comprising at least a transmitter (T1; T2) able to transmit a pilot sequence (PS1; PS2),
○ a receiver path (RP1; RP2) comprising at least a receiver (R1; R2) able to receive a pilot sequence (PS1; PS2),
- a baseband processing device,
and said method comprising the step of:
- generating (301) a pilot sequence (PS1) for a reference transmitter, the reference transmitter being a transmitter (T1; T2) of the at least two transceiver paths (TSP1; TSP2),
- tuning (303) the reference transmitter in the radio frequency band of the receivers (R1; R2),
- transmitting (305) the pilot sequence (PS1) by the reference transmitter on a reference transmitter path, the reference transmitter path being a transmitter path (TP1; TP2) of the at least two transceiver paths (TSP1; TSP2),
- looping back (307) the pilot sequence (PS1) from the reference transmitter path to each of the receiver path (R1; R2),
- receiving (309) on each receiver (R1; R2) the pilot sequence (PS1),
- analyzing (311) each received pilot sequence (PS1) on the baseband processing device,
- generating (313) calibration parameters on the baseband processing device,
- applying (315) correction factors on the baseband processing device according to the calibration parameters.

15. A method to calibrate transmitter paths from a multi-path radio frequency antennas system, said multi-path radio frequency antennas system comprising:
- at least two transceiver paths (TSP1; TSP2) comprising each:
○ a transmitter path (TP1; TP2) comprising at least a transmitter (T1; T2) able to transmit a pilot sequence (PS1; PS2),
○ a receiver path (RP1; RP2) comprising at least a receiver (R1; R2) able to receive a pilot sequence (PS1; PS2),
- a baseband processing device,
and said method comprising the step of:
- generating (317) a pilot sequence (PS1, PS2) for each transmitter (T1; T2),
- transmitting (319) the pilot sequences (PS1, PS2) by the transmitters (T1; T2),
- setting (321) a reference receiver path with a reference receiver, the reference receiver path being a receiver path (RP1; RP2) of the at least two transceiver paths (TSP1; TSP2), the reference receiver being the receiver (R1; R2) of the said receiver path (RP1; RP2),
- tuning (323) the reference receiver in the radio frequency band of the transmitters (T1; T2),
- looping back (325) the pilot sequences (PS1, PS2) from the transceiver paths (TSP1; TSP2) to the reference receiver path,
- receiving (327) on the reference receiver the pilot sequences (PS1, PS2),
- analyzing (329) the received pilot sequence (PS1, PS2) on the baseband processing device,
- generating (331) calibration parameters on the baseband processing device,
- applying (333) correction factors on the baseband processing device according to the calibration parameters.
